# EUROPÄISCHE PATENTSCHRIFT

(11) **EP 1 299 215 B1**
(45) Veröffentlichungstag und Bekanntmachung des Hinweises auf die Patenterteilung: **28.07.2004**
(21) Anmeldenummer: 02732684.2
(22) Anmeldetag: 27.04.2002
(51) Int. Cl.: B27D 5/00, B29C 63/00

(54) **KANTENANLEIMAGGREGAT MIT ANDRUCKROLLE**
EDGE-BANDING MACHINE COMPRISING A PRESSURE ROLLER
ENCOLLEUSE DE CHANTS COMPORTANT UN ROULEAU PRESSEUR

(30) Priorität: 18.05.2001 DE 10124695
(43) Veröffentlichungstag der Anmeldung: 09.04.2003
(73) Patentinhaber: IMA Klessmann GmbH Holzbearbeitungssysteme, 32312 Lübbecke (DE)
(72) Erfinder: ROSE, Martin, 32339 Espelkamp (DE); BIERENRIEDE, Hartmut, 32351 Stemwede (DE); SCHÜRMANN, Michael, 32257 Bünde (DE)
(74) Vertreter: Elbertzhagen, Otto, Dipl.-Ing., Patentanwalt
(86) Internationale Anmeldenummer: PCT/EP2002/004683
(87) Internationale Veröffentlichungsnummer: WO 2002/094518

(56) Entgegenhaltungen:
- EP-A- 0 728 561

## Beschreibung

### Technisches Gebiet

Die Erfindung bezieht sich auf ein Kantenanleimaggregat der im Gattungsbegriff des Patentanspruchs 1 näher bezeichneten Art. Eine solche Vorrichtung ist z.B. aus EP-A-0,728,561 bekannt.

### Stand der Technik

Bei solchen Kantenanleimaggregaten hat die Andruckrolle die Aufgabe, die Verpressung des an der Auftragseite beleimten Kantenstreifens auf die betreffende Schmalflächenseite des jeweiligen Werkstücks zu bewirken. Entsprechend der Gestaltung und vor allem dem Verlauf der Schmalflächenseite der Werkstücke wählt man die Andruckrolle mit einem möglichst großen Durchmesser, damit entsprechend der Krümmungsradius der Biegung des Kantenstreifens an der Anpreßstelle so groß wie möglich ist. Bei geradlinig sich erstreckenden Schmalflächenseiten der Werkstücke ist dies unproblematisch. Anders verhält es sich bei solchen Werkstückseiten, die geschweift oder geschwungen sind, wobei Kurvenformen mit geringen Krümmungsradien auftreten. Für das Anfahren des Kantenstreifens müssen hierbei Andruckrollen verwendet werden, die einen dementsprechend geringen Durchmesser haben, um an jeder Stelle der Werkstückschmalflächenseite den Kantenstreifen noch mit Druck auftragen zu können.

Ein wesentliches Merkmal der Kantenanleimaggregate der gattungsbildenden Art ist die geradlinige Führung des Kantenstreifens zumindest von der Einzugrolle an der Leimauftragwalze vorbei bis hin zur Andruckrolle, womit bereits ab der Einzugrolle der Kantenstreifen tangential auf die Andruckrolle ausgerichtet ist. Folglich entfallen Umlenkungen des Kantenstreifens innerhalb des Kantenanleimaggregates, womit entsprechende Umlenkrollen entbehrlich sind. Für die Plazierung und Justierung der Leimauftragwalze mit ihrer Peripherie bietet dies Vorteile, zumal nach dem Leimauftrag auf der Kontaktseite des Kantenstreifens eine Umlenkung nur noch über Umlenkrollen möglich ist, die den Kantenstreifen an der nicht mit dem Leimauftrag versehenen Seite beaufschlagen. Darüber hinaus bietet die geradlinige Führung des Kantenstreifens innerhalb des Kantenanleimaggregates den Vorzug, daß bei nahezu jedem Material sich der Kantenstreifen in gerader Richtung selbsttätig in das Kantenanleimaggregat einfädeln und bis zur Andruckrolle hin seinen Weg finden kann. Nachteilig bei den bekannten Ausführungen ist, für jeden Durchmesser der Andruckrolle ein separates Kantenanleimaggregat vorsehen zu müssen. Dies hängt mit der geradlinigen Führung des Kantenstreifens zusammen, die bei verschiedenen Durchmessern der Andruckrollen eine unterschiedliche innere Geometrie des Kantenanleimaggregates erfordert.

Andererseits gibt es gattungsfremde Kantenanleimaggregate, bei denen die Andruckrolle austauschbar ist, so daß Andruckrollen unterschiedlichen Durchmessers in ein und demselben Aggregat verwendet werden können. Hierbei sind die erwähnten Umlenkungen des Kantenstreifens im Kantenanleimaggregat vorzusehen, und ein geradliniges Heranführen des Kantenstreifens an die Andruckrolle läßt sich hierbei nur bei einem einzigen Andruckrollendurchmesser realisieren. Bei der Umstellung auf eine Andruckrolle mit einem anderen Durchmesser ist es erforderlich, die Führung des Kantenstreifens innerhalb des Kantenanleimaggregates neu zu justieren, was einen erheblichen Rüstaufwand erfordert. Außerdem ist es umständlich, das Ende eines neu einzuführenden Kantenstreifens durch das Aggregat hindurch bis hin zur Andruckrolle einzufädeln.

### Die Erfindung

Der Erfindung liegt deshalb die Aufgabe zugrunde, ein Kantenanleimaggregat der gattungsgemäßen Art zu schaffen, das eine Anpassung an unterschiedliche Durchmesser der Andruckrolle ermöglicht.

Diese Aufgabe wird bei einem Kantenanleimaggregat der gattungsbildenden Art nach der Erfindung durch die kennzeichnenden Merkmale des Patentanspruchs 1 gelöst.

Für die Erfindung ist wesentlich, daß für ein und dasselbe Aggregat nicht nur gegeneinander austauschbare Andruckrollen mit verschiedenen Durchmessern verwendet werden können, sondern sich der Zwischenträger, auf dem zumindest die Leimauftragwalze, die Einzugrolle und die den Kantenstreifen ferner führenden Gegenrollen angeordnet sind, sich so justieren läßt, daß bei allen verwendbaren Andruckrollen mit unterschiedlichen Durchmessern die Führung des Kantensteifens von der Einzugrolle vorbei an der Leimauftragwalze bis hin zur jeweiligen Andruckrolle in gerader, tangentialer Richtung erfolgt.

Vorteilhafte Ausgestaltungsmerkmale der Erfindung ergeben sich aus den Unteransprüchen.

### Kurzbeschreibung der Zeichnungsabbildungen

Die Erfindung wird nachfolgend anhand der Zeichnung an einem Ausführungsbeispiel noch näher erläutert. Dabei zeigen:
- Fig. 1: die Seitansicht eines Kantenanleimaggregates mit austauschbarer Andruckrolle,
- Fig. 2: die Draufsicht auf ein Kantenanleimaggregat der in Figur 1 dargestellten Art in Arbeitsposition und
- Fig. 3: eine der Figur 2 entsprechende Darstellung des Kantenanleimaggregates jedoch mit einer Andruckrolle größeren Durchmessers sowie mit zu Wartungs- oder Rüstzwecken aufgeschwenktem Zwischenträger.

### Wege zur Ausführung der Erfindung

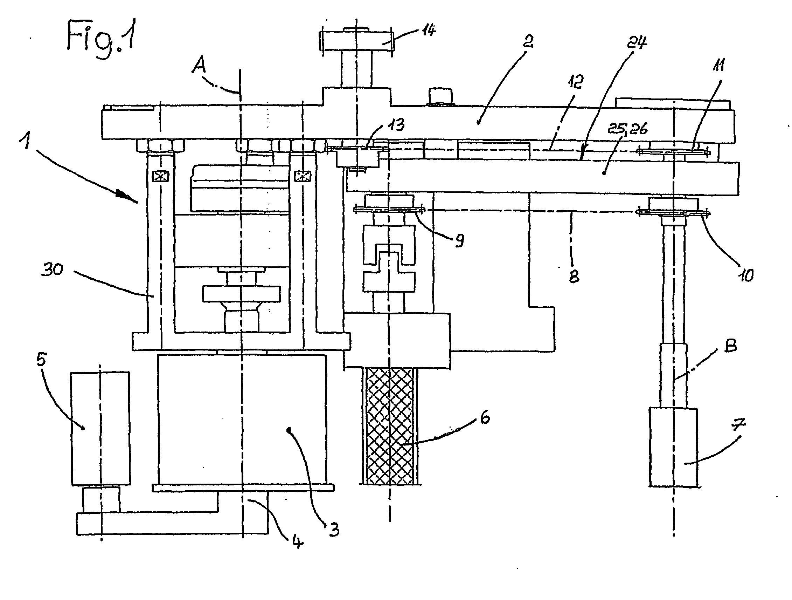

In Figur 1 erkennt man das Gestell 1 des Kantenanleimaggregates, welches ingesamt um eine Achse A geschwenkt werden kann. In Richtung dieser Achse A wird das Kantenanleimaggregat an einer Drehaufnahme der zugehörigen Maschine aufgenommen, womit zugleich die Achse A eine der programmsteuerbaren Achsen der Maschine ist.

Das Aggregatgestell 1 hat eine obere Grundplatte 2, an der nach unten vorstehend ein Gestellteil 30 angeordnet ist, an welchem eine Andruckrolle 3 gelagert ist. Die Achse der Andruckrolle 3 ist identisch mit der Achse A, um die das gesamte Aggregat verschwenkt werden kann. Die Andruckrolle 3 sitzt auf einem Achskörper 4, der zum Auswechseln der Andruckrolle 3, insbesondere gegen eine solche mit einem anderen Durchmesser, von dem Gestellteil 30 abgenommen werden kann. Auf dem Achskörper 4 ist ferner noch achsparallel mit der Andruckrolle 3 eine Nachlaufrolle 5 gelagert, deren Durchmesser unabhängig von dem der Andruckrolle 3 ist, weswegen bei Andruckrollen 3 verschiedenen Durchmessers die gleiche Nachlaufrolle 5 verwendet werden kann.

Wie es sich auch aus den weiteren Zeichnungsfiguren ergibt, ist achsparallel mit der Andruckrolle 3 eine Leimauftragwalze 6 vorhanden, die drehend angetrieben wird. Gleiches gilt ferner für eine Einzugrolle 7, die ebenfalls achsparallel mit der Andruckrolle 3 ist und die mit gleicher Umfangsgeschwindigkeit wie die Leimauftragwalze 6 angetrieben wird. Dazu dient ein erster Kettentrieb 8 mit Kettenrädern 9 und 10, die auf Verlängerungen der Achsen der Leimauftragwalze 6 und der Einzugsrolle 7 sitzen. Auf der Achsverlängerung der Einzugrolle 7 sitzt ein weiteres Kettenrad 11, das zu einem Kettentrieb 12 gehört, der über ein Antriebskettenrad 13 geführt ist. Das Antriebskettenrad 13 ist mit einem auf der gleichen Achse sitzenden Antriebszahnrad 14 drehfest verbunden, über das von der zugehörigen Maschine her der Fremdantrieb der Leimauftragwalze 6 und der Einzugrolle 7 bewirkt wird.

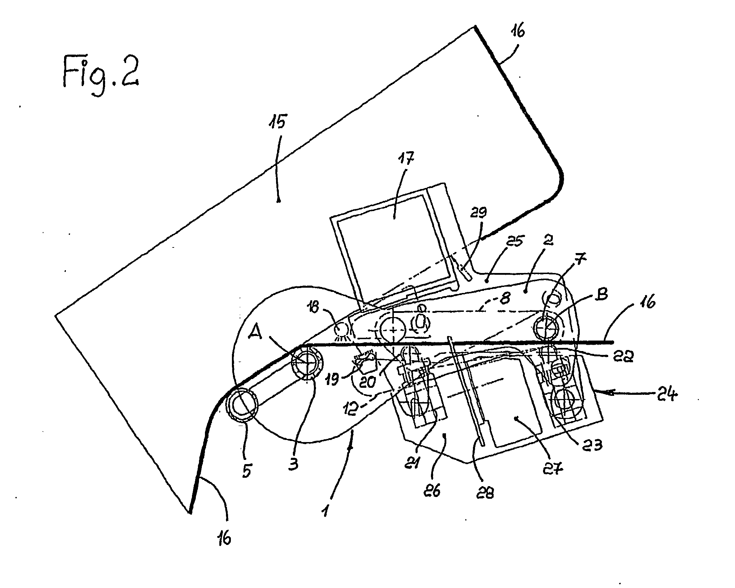

Figur 2 gibt ein Teil eines Werkstücks 15 wieder, bei dem es sich beispielsweise um eine Möbelplatte handelt. Entlang der entsprechend dem Umriß des Werkstücks 5 verlaufenden Schmalflächenseite des Werkstücks 15 wird ein Kantenstreifen 16 aufgeleimt, der das Kantenanleimaggregat durchläuft. Mittels der Einzugrolle 7 wird der Kantenstreifen 16 in das Aggregat eingezogen, und dazu liegt der Einzugrolle 7 eine Gegenrolle 22 gegenüber, die mittels eines Zylinders 23 pneumatisch in Richtung zur Einzugrolle 7 hin beaufschlagt ist, um den Kantenstreifen 16 reibschlüssig gegen die Einzugrolle 7 anzudrücken. Der tangential an der Einzugrolle 7 vorbeilaufende Kantenstreifen 16 verläuft weiter in gerader Richtung bis hin zur Andruckrolle 3, so daß die Tangente an die Andruckrolle 3 an derjenigen Stelle, an der der Kantenstreifen 16 auf die Andruckrolle 3 aufläuft, mit der Tangente der Einzugrolle 7 zusammenfällt, in deren Richtung von der Einzugrolle 7 der Kantenstreifen 16 vorgeschoben wird. Näher zur Andruckrolle 3 hin, also mit größerem Anstand zur Einzugrolle 7, ist die Leimauftragwalze 6 angeordnet, die den auf die Auftragsseite des Kantenstreifens 16 zu überführenden Leim aus einem Vorratsbehälter 17 bezieht. Zwischen der Leimauftragwalze 6 und der Andruckrolle 3 kann der auf den Kantenstreifen 16 auftragene Leim noch mit Heißluft beaufschlagt werden, dazu findet sich auf dem Weg zwischen der Leimauftragwalze 6 und der Andruckrolle 3 eine entsprechende Heißluftvorrichtung 18. Um das Material des Kantenstreifens 16 für den Biegevorgang an der Andruckrolle 3 geschmeidig zu halten, kann eine Wärmebestrahlung des Kantenstreifens 16 an der nicht beschichteten Seite vorgesehen werden, dazu dient ein Strahler 19. Der Leimaufauftragwalze,6 liegt etwas versetzt eine weitere Gegenrolle 20 gegenüber, zwischen der und der Leimauftragwalze 6 der Kantenstreifen 16 hindurchgeführt ist. Auch diese Gegenrolle 20 beaufschlagt den Kantenstreifen mit einem gewissen Druck, der über einen Pneumatikzylinder 21 eingestellt werden kann.

Sämtliche mit der Führung und dem Leimauftrag des Kantenstreifens 16 zusammenhängenden Elemente sind auf einem Zwischenträger 24 angeordnet, dies trifft vor allem für die Einzugrolle 7, die Leimauftragwalze 6 und die Gegenrollen 20 und 22 zu. Dieser Zwischenträger 24 ist um eine Achse B schwenkbar, die mit der Rotationsachse der Einzugrolle 7 zusammenfällt. Es versteht, daß dazu der Zwischenträger 24, der während des Betriebs des Kantenanleimaggregates am Aggregatgestell 1 fixiert ist, gelöst wird. Einerseits bleibt dadurch die Zuordnung aller Aggregatelemente, die auf dem Zwischenträger 24 angeordnet sind untereinander erhalten, andererseits kann die geradlinige Führung des Kantenstreifens 16 von der Einzugrolle 7 bis zur Andruckrolle 3 auch dann beibehalten werden, wenn eine Andruckrolle 3 mit verändertem Durchmesser verwendet wird.

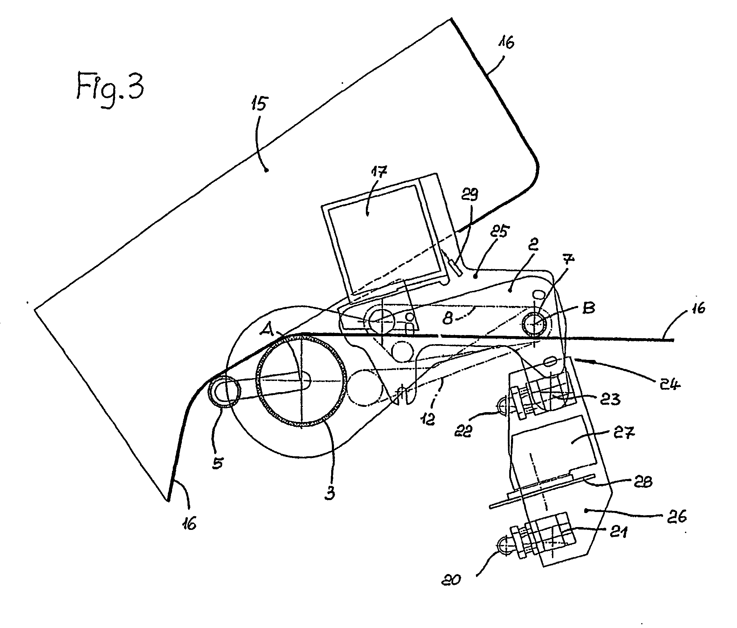

Während beim Ausführungsbeispiel nach Figur 2 eine Andruckrolle 3 mit relativ kleinem Durchmesser dargestellt ist, zeigt das Ausführungsbeispiel nach Figur 3 eine Andruckrolle 3 mit einem relativ großen Durchmesser. Man erkennt an der Schwenkstellung des Zwischenträgers 24 in den beiden genannten Figuren, daß sich dessen Winkellage relativ zum Aggregatgestell 1 geändert hat. Vorzugsweise besteht der Zwischenträger 24 aus einer Schwenkplatte 25, 26, die parallel mit der Grundplatte 2 des Aggregatgestells 1 ist, womit die Verschwenkung des Zwischenträgers 24 in einer zur Grundplatte 2 parallelen Ebene vorgenommen wird.

Auf der Schwenkplatte 25, 26 ist einerseits auch der Vorratsbehälter 17 für den Leim und andererseits eine Kappsäge 27 angeordnet, die mit ihrem Sägeblatt 28 den Kantenstreifen 16 an einer Stelle durchtrennt, die zwischen der Einzugrolle 7 und der Leimauftragwalze 6 liegt. Die Kappsäge 27 wird mittels eines Sensors 29 gesteuert, der beim Umfahren des Werkstücks 15 mittels des Kantenanleimaggregates auf das bereits aufgetragene Ende des Kantenstreifens 16 aufläuft, damit der Kantenstreifen 16 von der Kappsäge 27 gerade so abgelängt wird, daß das zweite Kantenstreifenende sich dicht an das erste aufgetragene Ende unter Bildung einer minimalen Fuge anlegt.

Die Schwenkplatte 25, 26, die den Zwischenträger 24 bildet, besteht aus einem ersten Plattenteil 25 und einem zweiten Plattenteil 26, wobei das zweite Plattenteil 26 von dem ersten Plattenteil 25 wegschwenkbar ist. Dies veranschaulicht Figur 3. Auf dem wegschwenkbaren zweiten Plattenteil 26 sind diejenigen Aggregatelemente angeordnet, die sich auf derjenigen Seite des durchlaufenden Kantenstreifens 16 befinden, die nicht mit Leim beschichtet wird und die auf die Andruckrolle 3 aufläuft. Dazu gehören die beiden Gegenrollen 20 und 22 und die Kappsäge 27. Ist der Plattenteil 26 vom ersten Plattenteil 25 weggeschwenkt, dann hat man zwecks Wartung und Justierung einen besonders guten Zugang zu denjenigen Aggregatelementen, die bei durchlaufendem Kantenstreifen 16 auf dessen Seite angeordnet sind, die mit Leim beschichtet wird. Es sind dies in erster Linie die Einzugrolle 7 und die Leimauftragwalze 6.

Die Schwenkung des Zwischenträgers 24 bzw. der Schwenkplatte 25, 26 um die Achse B, welche zugleich die Rotationsachse der Einzugrolle 7 darstellt, hat den Vorzug, daß die Kettentriebe 8, 12 beim Verschwenken des Zwischenträgers 24 nicht verstellt oder justiert werden müssen, dies gilt insbesondere für den Kettentrieb 12, der zu dem Kettenrad 13 führt, welches ortsfest an der nicht schwenkbaren Grundplatte 2 bzw. dem Aggregatgestell 1 gelagert ist.

## Patentansprüche

1. Kantenleimaggregat für eine Maschine zum Bearbeiten plattenförmiger Werkstücke (15) aus Holz und/oder Holz-ersatzstoffen, wie Platten für den Möbelbau oder Innenausbau, stationär auf einem Bearbeitungsplatz, wobei das Kantenanleimaggregat entlang der zumindest einen Schmalflächenseite der Werkstücke (15), auf die ein Kantenstreifen (16) aufzuleimen ist, verfahren wird und eine den Kantenstreifen (16) an die jeweilige Werkstückschmalflächenseite an fahrende Andruckrolle (3) hat, welcher der Kantenstreifen (16) innerhalb des Aggregates in gerader Richtung tangential zugeführt wird, wobei vor der Andruckrolle (3) achsparallel dazu sowie tangential zur Zuführrichtung des Kantenstreifes (16) eine Leimauftragwalze (6) und eine Einzugrolle (7) mit den Kantenstreifen (16) führenden Gegenrollen (20, 22) angeordnet sind,
**dadurch gekennzeichnet,**
**daß** die Andruckrolle (3) gegen andere mit unterschiedlichen Durchmessern austauschbar ist und alle vorgesehenen Andrückrollen (3) am Aggregatgestell (1) bei jeweiligem Einsatz in achsgleicher Position angeordnet sind und daß die Leimauftragwalze (6), die Einzugrolle (7) und die Gegenrollen (20, 22) an einem am Aggregatgestell (1) lösbaren Zwischenträger (24) gelagert sind, der auf die Tangentenrichtung der jeweiligen Andruckrolle (3), in welcher der Kantenstreifen (16) geradlinig zuzuführen ist, einstellbar ist.

2. Kantenanleimaggregat nach Anspruch 1,
**dadurch gekennzeichnet,**
**daß** der Zwischenträger (24) am Aggregatgestell (1) im gelösten Zustand um eine ortsfeste, mit der Achse der Andruckrollen (3) parallele Achse (B) verschwenkbar ist.

3. Kantenanleimaggregat nach Anspruch 2,
**dadurch gekennzeichnet,**
**daß** die Schwenkachse (B) des Zwischenträgers (24) nahe der Stelle liegt, an welcher der Kantenstreifen (16) in das Aggregat einläuft.

4. Kantenanleimaggregat nach Anspruch 2 oder 3,
**dadurch gekennzeichnet,**
**daß** die Schwenkachse (B) des Zwischenträgers (24) gleich der Achse der Einzugrolle (7) ist.

5. Kantenanleimaggregat nach Anspruch 4,
**dadurch gekennzeichnet,**
**daß** die Einzugrolle (7) und die Leimauftragwalze (6) mittels eines ersten Kettentriebs (8) miteinander verbunden sind und die Einzugrolle (7) mittels eines zweiten Kettentriebs (12) mit einem am Aggregatgestell (1) gelagerten Antriebsrad (13) verbunden ist.

6. Kantenanleimaggregat nach einem der Ansprüche 2 bis 5,
**dadurch gekennzeichnet,**
**daß** das Aggregatgestell (1) zumindest eine Grundplatte (2) hat und der Zwischenträger (24) aus zumindest einer hiermit parallelen Schwenkplatte (25, 26) besteht.

7. Kantenanleimaggregat nach Anspruch 6,
**dadurch gekennzeichnet,**
**daß** die Schwenkplatte (25, 26) einen ersten Plattenteil (25) und einen zweiten, vom ersten Plattenteil (25) wegschwenkbaren Plattenteil (26) hat, wobei auf dem ersten Plattenteil (25) die Leimauftragwalze (6) und die Einzugrolle (7) und auf dem zweiten Plattenteil (26) die Gegenrollen (20, 22) angeordnet sind.

8. Kantenanleimaggregat nach einem der Ansprüche 1 bis 7,
**dadurch gekennzeichnet,**
**daß** am Zwischenträger (24) eine Kappsäge (27) zum Ablängen des Kantenstreifens (16) angeordnet ist, deren Schnittstelle zwischen der Leimauftragwalze (6) und der Einzugrolle (7) liegt.

9. Kantenanleimaggregat nach Anspruch 7 und 8,
**dadurch gekennzeichnet,**
**daß** die Kappsäge (27) auf dem vom ersten Plattenteil (25) der Schwenkplatte (25, 26) wegschwenkbaren Plattenteil (26) angeordnet ist.

## Claims

1. Edge banding machine for a machine for finishing workpieces (15) in the form of panels of wood and/or wood substitutes, such as panels for furniture construction or internal fittings, stationary on a machining site in which the edge banding machine is moved along the at least one narrow surface side of the workpieces (15) on which an edging strip (16) is to be glued, and has a pressure roller (3) which moves the edging strip (15) up against the relevant narrow surface side of the workpiece, with the edging strip (16) being supplied to the pressure roller inside the machine tangentially in a straight direction whereby a glue applicator roller (6) and an intake roller (7) with counter rollers (20, 22) guiding the edging strip (16) are arranged in front of the pressure roller (3) and axially parallel thereto as well as tangentially to the supply direction of the edging strip (16),
**characterised in that**,
the pressure roller (3) can be exchanged for other rollers with different diameters and all the pressure rollers (3) provided are arranged on the machine frame (1) in an axially identical position with each use and that the glue applicator roller (6), the intake roller (7) and the counter rollers (20, 22) are mounted on an intermediate support (24) which is detachable from the machine frame (1) and which can be adjusted to the tangential direction of the relevant pressure roller (3) in which the edging strip (16) is to be supplied in a straight line.

2. Edge banding machine according to claim 1,
**characterised in that**
the intermediate support (24) is mounted on the machine frame (1) to swivel in the released state about a locally fixed axis (B) which is parallel with the axis of the pressure rollers (3).

3. Edge banding machine according to claim 2,
**characterised in that**
the swivel axis (B) of the intermediate support (24) lies close to the position where the edging strip (16) runs into the machine.

4. Edge banding machine according to claim 2 or 3,
**characterised in that**
the swivel axis (B) of the intermediate support (24) is identical with the axis of the intake roller (7).

5. Edge banding machine according to claim 4,
**characterised in that**
the intake roller (7) and the glue applicator roller (6) are connected together by means of a first chain drive (8) and the intake roller (7) is connected by a second chain drive (12) to a drive wheel (13) which is mounted on the machine frame (1).

6. Edge banding machine according to one of claims 2 to 5,
**characterised in that**
the machine frame (1) has at least one base plate (2) and the intermediate support (24) consists of at least one swivel plate (25, 26) which is parallel thereto.

7. Edge banding machine according to claim 6,
**characterised in that**
the swivel plate (25, 26) has a first plate part (25) and a second plate part (26) which can be swivelled away from the first plate part (25) wherein the glue applicator roller (6) and intake roller (7) are mounted on the first plate part (25) and the counter rollers (20, 22) are mounted on the second plate part (26).

8. Edge banding machine according to one of claims 1 to 7,
**characterised in that**
a cross-cut saw (27) is mounted on the intermediate support (24) for cutting off the edging strip (16) where its cutting point lies between the glue applicator roller (6) and the intake roller (7).

9. Edge banding machine according to claim 7 and 8,
**characterised in that**
the cross-cut saw (27) is mounted on the plate part (26) which can swivel away from the first plate part (25) of the swivel plate (25, 26).

## Revendications

1. Encolleuse de chants pour une machine d'usinage de pièces (15) en forme panneaux en bois et / ou en produits de remplacement de bois, tels que panneaux pour la fabrication de meubles ou pour l'aménagement intérieur, qui équipe fixement un poste de travail, ladite encolleuse étant conduite le long d'au moins une surface latérale mince de la pièce à traiter (15), sur laquelle une bande de revêtement de chant (16) doit être collée, et étant équipée d'un rouleau presseur (3), qui conduit la bande de revêtement de chants (16) à la surface latérale mince concernée de la pièce à traiter, rouleau presseur auquel la bande de revêtement de chants (16) est amenée tangentiellement, en ligne droite, à l'intérieur de l'encolleuse, un rouleau encolleur (6) et un rouleau d'amenée (7), avec les contre-rouleaux (20, 22), qui guident la bande de revêtement de chants (16), étant disposés en amont dudit rouleau presseur (3), parallèlement à l'axe ainsi que tangentiellement par rapport à la direction d'amenée de la bande de revêtement de chants (16),
**caractérisée en ce que**
le rouleau presseur (3) peut être remplacé par d'autres rouleaux presseurs de différents diamètres et tous les rouleaux presseurs (3) prévus étant installés, lors de leur utilisation respective, sur le bâti (1) de l'encolleuse, et que le rouleau encolleur (6), le rouleau d'amenée (7) et les contre-rouleaux (20, 22) sont montés sur une entretoise (24) qui, équipant de manière amovible ledit bâti (1), peut être adaptée à la direction tangentielle de chaque rouleau presseur (3), dans laquelle la bande de revêtement de chants (16) doit être conduite en ligne droite.

2. Encolleuse de chants selon la revendication 1,
**caractérisée en ce que**
l'entretoise (24), à l'état dégagé, peut être pivotée sur le bâti du groupe (1), autour d'un axe (B) fixe, parallèle à l'axe du rouleau presseur (3).

3. Encolleuse de chants selon la revendication 2,
**caractérisée en ce que**
l'axe de pivotement (B) de l'entretoise (24) est situé à proximité de l'endroit auquel la bande de revêtement de chants (16) est introduite dans l'encolleuse de chants.

4. Encolleuse de chants selon la revendication 2 ou 3,
**caractérisée en ce que**
l'axe de pivotement (B) de l'entretoise (24) est égal à l'axe du rouleau d'amenée (7).

5. Encolleuse de chants selon la revendication 4,
**caractérisée en ce que**
le rouleau d'amenée (7) et le rouleau encolleur (6) sont reliés ensemble à l'aide d'une première transmission par chaîne (8) et le rouleau encolleur (7) est relié, à l'aide d'une deuxième transmission par chaîne (12), à une roue de commande (13) montée au bâti de l'encolleuse de chants (1).

6. Encolleuse de chants selon l'une des revendications 2 à 5,
**caractérisée en ce que**
la bâti de l'encolleuse de chants (11) possède au moins une plaque de base (2) et que l'entretoise (24) consiste au moins en une plaque pivotante (25, 26), parallèle à celle-ci.

7. Encolleuse de chants selon la revendication 6,
**caractérisée en ce que**
la plaque pivotante (25, 26) présente une première partie (25) et une deuxième partie (26) pouvant être éloignée de la première partie (25) de la plaque par pivotement, le rouleau encolleur (6) et le rouleau d'amenée (7) étant disposés sur la première partie (25) de la plaque et les contre-rouleaux (20, 22) étant disposés sur la deuxième partie (26) de la plaque.

8. Encolleuse de chants selon l'une des revendications 1 à 7,
**caractérisée en ce que**,
sur l'entretoise (24), est disposée une scie tronçonneuse (27) pour le tronçonnage de la bande de revêtement de chants (16), dont le point d'intersection est situé entre le rouleau encolleur (6) et le rouleau d'amenée (7).

9. Encolleuse de chants selon les revendications 7 et 8,
**caractérisée en ce que**
la scie tronçonneuse (27) est disposée sur la partie (26) de la plaque pouvant être éloignée par pivotement de la première partie (25) de la plaque de pivotement (25, 26).
